## Europäisches Patentamt

## European Patent Office

(11) Veröffentlichungsnummer: **0 080 589**
**B1**

## Office européen des brevets

(19)

(12) **EUROPÄISCHE PATENTSCHRIFT**

(45) Veröffentlichungstag der Patentschrift:
**13.08.86**

(21) Anmeldenummer: **82109464.6**

(22) Anmeldetag: **13.10.82**

(51) Int. Cl.⁴: **C 23 G 5/00,** C 23 G 5/04,
C 22 B 1/00, C 10 G 1/00,
B 03 B 9/02, B 03 B 9/04 //
B03D1/00, C02F1/24, C02F1/40,
C02F11/12

(54) **Verfahren und Anlage zur Reinigung von mit fettigen Substanzen, insbesondere Öl, verschmutzten Walzzunder und zur Gewinnung von Erdöl aus ölhaltigen Mineralien.**

(30) Priorität: **01.12.81 DE 3147521**
**19.06.82 DE 3223011**

(43) Veröffentlichungstag der Anmeldung:
**08.06.83 Patentblatt 83/23**

(45) Bekanntmachung des Hinweises auf die Patenterteilung:
**13.08.86 Patentblatt 86/33**

(84) Benannte Vertragsstaaten:
**BE DE FR GB IT NL SE**

(56) Entgegenhaltungen:
**DE-A-2 610 803**
**DE-A-3 043 220**
**DE-B-2 532 689**
**DE-C-3 120 463**
**DE-C-3 146 809**
**GB-A-1 567 221**
**US-A-3 997 359**

(73) Patentinhaber: **Thyssen Industrie AG, Am Thyssenhaus 1, D-4300 Essen 1 (DE)**

(72) Erfinder: **Weber, Günter, Bottenbruch 27, D-4330 Mülheim (DE)**
Erfinder: **Grover, Brijmohan, Dr.- Ing., Wasserstrasse 9, D-4000 Düsseldorf (DE)**

(74) Vertreter: **Eberhard, Friedrich, Dr., Am Thyssenhaus 1, D-4300 Essen (DE)**

EP 0 080 589 B1

LIBER, STOCKHOLM 1986

## Beschreibung

Die Erfindung betrifft ein Verfahren zur Reinigung körniger Materialien, wie Walzzunder oder ölhaltigen Mineralien, von mitgeführten fettigen Substanzen, insbesondere Öl, bei dem die Materialien mit einer Lösungsmittel enthaltenden Waschflüssigkeit gewaschen, davon getrennt und anschließend getrocknet werden und bei dem die von den fettigen Substanzen befreite Waschflüssigkeit in den Prozeß zurückgeführt wird.

Aus der DE-B-25 32 689 ist ein gattungsgemäßes Verfahren bekannt, bei dem zunächst der Walzzunder mit 10 bis 20 Gew.% Lösungsmittel vermischt und das Fett in der Mischung feinverteilt wird. Die Mischung wird kontinuierlich einem Lösungsmittelbad zugegeben und darin verteilt und der Walzzunder unter weiterer Durchmischung mit im Gegenstrom zufließendem ölfreiem Lösungsmittel langsam aus dem Lösungsmittelbad gefördert. Bei der Weiterförderung wird das Lösungsmittel aus dem nunmehr fettfreien Walzzunder zum Abtropfen gebracht bzw. durch Erwärmen ausgetrieben und der Walzzunder getrocknet. Das fetthaltige Lösungsmittel wird durch Destillieren regeneriert. Nach seiner Kondensation wird das fett- bzw. ölfreie Lösungsmittel im Kreislauf dem fetthaltigen, vorzugsweise auf 40 bis 45°C erwärmten Walzzunder zugeführt. Diese Arbeitsweise ist äußerst aufwendig. Insbesondere wird der hohe Energieverbrauch als störend empfunden, der durch das Austreiben des Lösungsmittels, dessen Destillationsaufbereitung sowie das Erwärmen des Walzzunders usw. verursacht ist. Weiterhin ist der hohe Aufwand für eine Anlage, auf der das Verfahren durchgeführt wird, nachteilig, weil eine leckarme Leitungsführung und eine gasdichte Abschirmung der gesamten Anlage gegenüber der Außenatmosphäre erforderlich ist, um Verluste an Lösungsmittel zu vermeiden und die Atmosphäre nicht zu verunreinigen.

Aus der DE-A-26 10 803 ist ein Verfahren zum Reinigen und Regenerieren von Schleifsand bekannt, bei dem fettige und andere Verunreinigungen mittels Flotation vom Schleifsand getrennt werden. Der Schleifsand selbst soll dabei physikalisch nicht verändert werden, so daß er wiederverwendet werden kann.

Beim Ablösen fettiger Substanzen von körnigen Materialien müssen Adhäsionskräfte zwischen den Körnern und den anhaftenden fettigen Substanzen überwunden werden. Eine vollständige Ablösung läßt sich auch in einer Flotation selbst dann nicht oder nur unter erheblichen Schwierigkeiten erreichen, wenn die Materialien auf für eine Flotation geeignete Korngrößen von unter 1 mm gebrochen sind.

Der Erfindung liegt die Aufgabe zugrunde, das Verfahren der eingangs beschriebenen Gattung so zu führen, daß die fettigen Substanzen zuverlässig von den körnigen Materialien abgelöst werden.

Diese Aufgabe wird dadurch gelöst, daß die gegebenenfalls auf Korngrößen unter 1 mm gebrochenen körnigen Materialien zur Oberflächenglättung einer festkörpermechanischen Beanspruchung unterworfen werden, bei der die mittlere Korngröße nur geringfügig verringert wird, und dann in einer Flotation gewaschen werden, daß die Materialien aus der unterläufigen Flotation abgetrennt und dann entwässernd getrocknet werden und daß die am Überlauf der Flotation ausgetragene, anschließend von den fettigen Substanzen befreite Überlaufflüssigkeit und/oder die nach der Flotation beim Abtrennen der körnigen Materialien anfallende Waschflotte in den Prozeß zurückgeführt wird.

Überraschenderweise hat sich gezeigt, daß eine festkörpermechanische Beanspruchung, bei der die mittlere Korngröße nur geringfügig, insbesondere um etwa 4 bis 6 % verringert wird und gleichzeitig die Oberflächen der Körner geglättet werden, die Voraussetzungen für das Ablösen der mitgeführten fettigen Substanzen bei der nachfolgenden Flotation schafft.

Offenbar werden durch die festkörpermechanische Beanspruchung die Adhäsionskräfte zwischen den körnigen Materialien und den fettigen Substanzen verringert, so daß die reinigende Wirkung des Waschwassers verbessert wird.

Die Waschflüssigkeit kann aus Wasser unter Zusatz von bekannten Waschdetergentien, das sind grenzflächenaktive, anionische bzw. kationische oder auch nichtionogene Verbindungen, wie Arylalkylsulfonate, Fettsäurekondensationsprodukte, Alkylpolyglykoläther oder dergleichen bestehen.

Handelt es sich um die Reinigung von Walzzunder, dann kann die festkörpermechanische Beanspruchung auch durch Mahlen erfolgen. Eine Mahldauer zwischen zwei und fünf Minuten ist ausreichend. Das Mahlen kann auch in Waschwasser, insbesondere in rückgeführter Waschflotte, durchgeführt werden. Eine derartige Mahlbehandlung in der Feuchte begünstigt Grenzflächenreaktionen auch im Kapillarbereich und ergibt eine Aktivierung für den nachfolgenden Waschprozeß bei schonender mechanischer Beanspruchung der körnigen Materialien.

Überraschenderweise eignet sich das beschriebene Verfahren nicht nur zum Reinigen von Walzzunder, sondern auch zur Abtrennung von Öl, insbesondere Erdöl aus ölführenden Mineralien, insbesondere Sanden und Gesteinen. Es ist lediglich erforderlich, grobstückig abgebaute Steine angemessen vorzubrechen, bevor sie nach dem angegebenen Verfahren behandelt werden.

Nachfolgend wird die Erfindung anhand einer lediglich ein Ausführungsbeispiel darstellenden Zeichnung ausführlich erläutert.

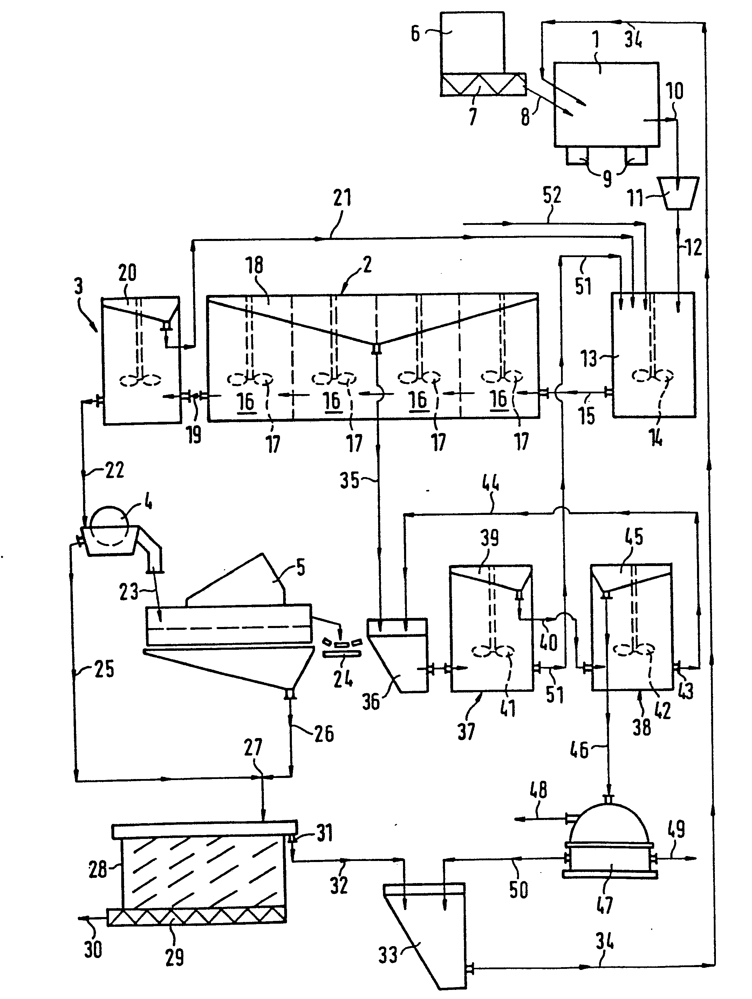

Die in der einzigen Figur dargestellte Anlage zur Durchführung des erfindungsgemäßen Verfahrens ist in ihrem grundsätzlichen Aufbau ausgezeichnet durch ein Mahlwerk 1, eine Flotationsmaschine 2, 3, einen Feststoffabscheider 4 und eine Entwässerungsmaschine 5.

Der beispielsweise aus einem Walzwerk oder einer Stranggießanlage stammende Walzzunder, der in der Regel als feuchter, mit Öl bzw. Fett verschmutzter Schlamm vorliegt, wird in einer Aufgabestation 6 bereitgehalten und mittels eines Schneckenaustragförderers 7 über die Leitung 8 mengendosiert dem Mahlwerk 1 zugeführt, das als Trommelmühle mit Mahlkugeln ausgebildet ist. Die Trommel des Mahlwerks 1 ist mittels eines nur schematisch gezeigten Mantelantriebs 9 drehbar und ist als Waschbehälter für die Vorwäsche des Walzzunders vorgesehen. Der Ausgang des Mahlwerks 1 ist über die Leitung 10, vorzugsweise einen Zwischenbehälter 11 und die Leitung 12 mit einem Konditionierbehälter 13 verbunden, in dem ein Rührwerk 14 angeordnet ist. Dem ist über die Leitung 15 der Hauptteil 2 der Flotationsmaschine für die Hauptwäsche des Walzzunders nachgeschaltet, der aus mehreren Flotationszellen 16 mit Rührwerken 17 besteht, wobei sämtliche Zellen 16 eine gemeinsame Oberlaufrinne 18 haben. In die Zellen 16 wird in bekannter Weise Luft eingeführt, was in der Zeichnung nicht dargestellt ist, so daß von den Rührwerken 17 jeweils ein feinperliger Luftstrom im Flotationsbad erzeugt wird. An den Hauptteil 2 der Flotationsmaschine schließt sich über die Leitung 19 eine zusätzliche Flotationszelle 3 mit Rührwerk und feinperligem Luftstrom als zweite Stufe der Flotationsmaschine an. Deren Oberlaufrinne 20 mündet über die Rückführleitung 21 in den Konditionierbehälter 13. Vom Unterlauf der Flotationszelle 3 führt eine Leitung 22 in den Feststoffabscheider 4, der als Magnetscheider ausgebildet ist. Der abgetrennte, eingedickte Walzzunder (Feststoff) wird über die Leitung 23 zur weiteren entwässernden Trocknung der Entwässerungsmaschine 5 zugeführt und gelangt von dort auf das Transportband 24. Die Leitungen 25 und 26 sind bei 27 zusammengeführt; sie sind Flüssigabläufe für die Waschflotte, die nur noch äußerst feine Feststoffanteile in geringer Menge enthält. Die nachgeschaltete Kläreinrichtung 28 für die Waschflotte, beispielsweise ein Lamellenklärer, hat eine Austragschnecke 29, so daß über die Leitung 30 eingedickter Schlamm beispielsweise in ein nicht dargestelltes Absetzbecken geleitet. Der Überlauf 31 ist über die Leitung 32, ggf. einen Zulaufbehälter 33 und die Rückführleitung 34 mit dem Mahlwerk 1 verbunden.

Aus der gemeinsamen Überlaufrinne 18 des Hauptteils 2 der Flotationsmaschine für die Walzzunderwäsche führt die Leitung 35 und der Zulaufbehälter 36 in einen weiteren zweistufigen Flotationsapparat für die Aufbereitung des ausflottierten ölangereicherten Gemisches, bei dem eine erste Flotationszelle 37 mit einer zweiten Flotationszelle 38 derart in Serie geschaltet ist, daß die Oberlaufrinne 39 über die Leitung 40 in die zweite Zelle 38 einmündet. Der Unterlauf 43 der zweiten Zelle 38 ist über die Rückführleitung 44 in den Zulaufbehälter 36 und damit in den Einlauf der ersten Zelle 37 rückgeführt und bildet somit einen Kreislauf. Die zeichnerisch angedeuteten Rührwerke zur Erzeugung eines feinperligen Luftstromes sind mit 41, 42 bezeichnet. Die Überlaufrinne 45 der zweiten Zelle 38 ist über die Leitung 46 mit dem Dreistoffscheider 47 verbunden, der je einen Auslaß für im wesentlichen Öl (Auslaß 48), Feststoff (Auslaß 49) und Waschflüssigkeit (Auslaß 50) aufweist. Die Auslaßleitung 50 ist in den Zulaufbehälter 33 geführt, der Waschflotte über die Leitung 34 in das Mahlwerk 1 rückführt.

Der aus der Aufgabestation 6 kommende feuchte Walzzunder wird in der Trommelmühle (Mahlwerk 1) unter dem Einfluß der Mahlkugeln und der Mahlwände einer festkörpermechanischen Beanspruchung unterzogen, wodurch die Adhäsionskräfte zwischen Öl- bzw. Fett- und Walzzunderteilchen verringert werden. Eine Mahldauer von etwa 2-5 Minuten ist im allgemeinen ausreichend, um die Konditionierung des Walzzunders für den nachfolgenden Waschprozeß zu erreichen. Dabei tritt eine nur geringfügige Verringerung der mittleren Korngröße der Walzzunderteilchen, beispielsweise um etwa 4% bis 6% ein; die an ihrer Oberfläche stark zerklüfteten Walzzunderteilchen wurden dabei nämlich im wesentlichen nur geglättet. In der Trommelmühle 1 wird der Walzzunder in über die Leitung 34 rückgeführter, gereinigter Waschflotte vorgewaschen, so daß eine vorkonditionierte Trübe über die Leitungen 10, 12 in den Konditionierbehälter 13 gelangt. In dem Behälter 13 wird die Trübe auf die Nachfolge-Flotation eingestellt. Das geschieht in aus anderen Flotationsprozessen, beispielsweise der Erz- und Kohleaufbereitung, bekannter Weise, indem die Trübe durch Zugabe über die Leitung 52 beispielsweise von Natronlauge hochalkalisch eingestellt wird, und weitere Flotationsmittel (Schaumbildner), zugeführt werden. Weiterhin wird hier die erforderliche Menge an Waschdetergenzien in den Behälter 13 zugegeben.

Im Hauptteil 2 der Flotationsmaschine für die Walzzunderwäsche werden die Öl- und Fettbestandteile mit ihrem wesentlichen Anteil zur Oberlaufrinne 18 aufgeschwommen, so daß aus der Leitung 19 am Flotationsunterlauf eine Trübe aus Waschflotte und weitgehend entöltem Walzzunder in die zusätzliche Flotationszelle 3 der Flotationsmaschine einströmt. An der Überlaufrinne 20 der Zelle 3 fällt eine Dispersion aus Waschflotte, aufgeschwommenen Walzzunderteilchen und Restöl an, die über die Leitung 21 in den Konditionierbehälter 13 vor die Flotation rückgeführt wird, so daß der gegebene Kreislauf eine wiederholte Wäsche dieses Gutanteils mit ggf. mehrmaliger Separation ergibt. Die entölte und entfettete Trübe in der Leitung 22 am Unterlauf der Zelle 3 gelangt in den Magnetscheider (Feststoffabscheider 4) wo der Feststoff abgetrennt, nachfolgend entwässernd getrocknet wird und einem Transportband zugeführt werden kann. Bei der Feststoffabtrennung und dem Entwässern anfallende Waschflotte wird in den Prozeß zurückgeführt, indem die geklärte Flotte dem Mahlwerk 1 zugeleitet wird.

Der Walzzunder fällt am Transportband 24 als schnittfähiges bzw. formbares Material an, das in seinem Feuchtigkeitsgehalt auf die spätere Verwendung, beispielweise ein Pelletisieren, eingestellt werden kann. Der gereinigte Walzzunder ist weitgehend frei von Öl und Fettbestandteilen.

In der Überlaufrinne 18 der Hauptstufe 2 der Flotationsmaschine für die Walzzunderwäsche sammelt sich eine schaumige Dispersion von vorrangig Öl mit Waschflüssigkeit und aufgeschwommenen feinen Feststoffteilchen. Die Trübe wird in den Zellen 37, 38 in Serie und im Kreislauf teilweise mehrmals flotiert, so daß in der ausgängigen Oberlaufrinne 45 ein flüssiges Ölprodukt entsteht mit geringen Beimengungen an Waschflotte und Feststoff, die im Dreistoffscheider 47 voneinander getrennt werden. Am Unterlauf der Flotationszelle 37 fällt Waschflotte an, die weitgehend ölfrei ist, die aber überwiegend die Feststoffanteile aus der schaumigen Dispersion in der Überlaufrinne 18 des Hauptteils 2 der Flotationsmaschine enthält. Über die Leitung 51 kann diese Waschflotte mit ihrem Feststoff (Walzzunder) in den Konditionierbehälter 13 zurückgeführt werden.

Bei den durchgeführten Versuchen hatte der mit Öl und Fett verschmutzte, zu reinigende Walzzunder in der Praxis übliche Ölgehalte von etwa 3 bis 5 Gew.%. Nach der Reinigungsbehandlung lag der Öl-/Fettgehalt unter 0,3 Gew.%. Für den gereinigten Walzzunder stehen zahlreiche Weiterverarbeitungen offen. Beispielsweise kann er auf Sinterbändern für Feinerze zugemischt werden, wobei keinerlei Gefahr für den sogenannten Ölbrand besteht, wie sie bei verunreinigtem Walzzunder in hohem Maße gegeben ist.

Für die Gewinnung von Erdöl wurde stückiges ölhaltiges Gestein vorgebrochen auf ein Kornband < 50 mm und dann nachgebrochen auf ein Kornband < 5 mm; beides erfolgte in üblichen Brechern die in der Zeichnung nicht dargestellt sind. Anschließend wurde das mineralische Material in das Mahlwerk 1 eingeführt, dort auf ein Korn < 1,0 mm gemahlen und in den nachfolgenden Anlageteilen gemäß Zeichnung weiterbehandelt. Das zu gewinnende Erdöl strömt mit wenig Feststoff und Waschflotte durch die Leitung 46 und wird bei 48 am Dreistoffscheider 47 ausgetragen.

1 = Mahlwerk
2 = Hauptteil (1. Stufe)

FIG1/30

der Flotationsmaschine
3 = zusätzl. Flotationszelle
4 = Feststoffabscheider
5 = Entwässerungsmaschine
6 = Aufgabestation
7 = Schneckenaustragförderer
8 = Leitung an 6/1
9 = Mantelantrieb
10 = Leitung an 1/11
11 = Zwischenbehälter
12 = Leitung an 11/13
13 = Konditionierbehälter
14 = Rührwerk in 13
15 = Leitung an 13/2
16 = Flotationszellen von 2
17 = Rührwerk von 16
18 = Überlaufrinne von 2
19 = Leitung an 2/3
20 = Überlaufrinne von 3
21 = Rückführleitung von 20
22 = Leitung an 3/4
23 = Leitung an 4/5
24 = Transportband
25 = Leitung an 4/28
26 = Leitung an 5/28
27 = T-Stück
28 = Waschflotten-Kläreinrichtung
29 = Austragschnecke
30 = Leitung an 29
31 = Überlauf an 28
32 = Leitung an 31/33
33 = Zulaufbehälter
34 = Rückführleitung an 33/1
35 = Leitung an 18/36
36 = Zulaufbehälter
37 = 1. Flotationszelle

FIG2/30

des weiteren Flotationsapparates
38 = 2. Flotationszelle
39 = Oberlaufrinne von 37
40 = Leitung von 39/38
41 = Rührwerk von 37
42 = Rührwerk von 38
43 = Unterlauf von 38
44 = Rückführleitung an 43/36
45 = Überlaufrinne von 38
46 = Leitung an 45/47.
47 = Dreistoffscheider
48 = Auslaß für Öl
49 = Auslaß für Feststoff

50 = Auslaß für Waschflotte
51 = Unterlauf von 37
52 = Zugabeleitung an 13-

**Patentansprüche**

1. Verfahren zur Reinigung körniger Materialien, wie Walzzunder oder ölhaltigen Mineralien, von mitgeführten fettigen Substanzen, insbesondere Öl, bei dem die Materialien mit einer Lösungsmittel enthaltenden Waschflüssigkeit gewaschen, davon getrennt und anschließend getrocknet werden und bei dem die von den fettigen Substanzen befreite Waschflüssigkeit in den Prozeß zurückgeführt wird, dadurch gekennzeichnet, daß die gegebenenfalls auf Korngrößen unter 1 mm gebrochenen Materialien zur Oberflächenglättung einer festkörpermechanischen Beanspruchung unterworfen werden, bei der die mittlere Korngröße nur geringfügig verringert wird, und dann in einer Flotation gewaschen werden, daß die Materialien aus der unterläufigen Flotation abgetrennt und dann entwässernd getrocknet werden und daß die am Überlauf der Flotation ausgetragene, anschließend von den fettigen Substanzen befreite Überlaufflüssigkeit und/oder die nach der Flotation beim Abtrennen der körnigen Materialien anfallende Waschflotte in den Prozeß zurückgeführt wird.

2. Verfahren nach Anspruch 1, dadurch gekennzeichnet, daß die Waschflüssigkeit aus Wasser unter Zusatz von Waschdetergenzien besteht.

3. Verfahren nach Anspruch 1 oder 2, dadurch gekennzeichnet, daß die festkörpermechanische Beanspruchung durch Mahlen erfolgt.

4. Verfahren nach Anspruch 3, dadurch gekennzeichnet, daß die Mahldauer etwa 2 bis 5 Minuten beträgt.

5. Verfahren nach Anspruch 3 oder 4, dadurch gekennzeichnet, daß die körnigen Materialien in Waschwasser, insbesondere in rückgeführter Waschflotte, gemahlen werden.

6. Verfahren nach Anspruch 1, dadurch gekennzeichnet, daß die mittlere Korngröße der körnigen Materialien um etwa 4 bis 6 % verringert wird.

7. Verfahren nach einem der Ansprüche 1 - 6, dadurch gekennzeichnet, daß die Flotation der die körnigen Materialien enthaltenden Trübe zweistufig ausgeführt wird.

**Claims**

1. Process for the purification of granular materials such as rolling mill scale or oil-containing minerals from fatty substances such as especially oil which are entrained with said materials or minerals, wherein the materials are washed with a washing liquid containing solvents, separated therefrom, and then dried, and wherein the washing liquid freed from the fatty substances is returned into the process, characterised in that the materials, which are broken to grain sizes below 1 mm if appropriate, are subjected for the purpose of surface smoothing to mechanical stressing with solid bodies in which operation the mean grain size is only slightly reduced, and are then washed in a flotation system, that the materials are separated out from the under-course of the flotation system and then dried with removal of water, and that the overflow liquid discharged at the flotation system overflow and then freed from the fatty substances, and/or the washing liquor resulting after the flotation on separation of the granular materials, are/is returned into the process.

2. Process according to claim 1, characterised in that the washing liquid consists of water with the addition of detergents.

3. Process according to claim 1 or 2, characterised in that the mechanical stressing with solid bodies is carried out by grinding.

4. Process according to claim 3, characterised in that the duration of the grinding operation amounts to approximately 2 to 5 minutes.

5. Process according to claim 3 or 4, characterised in that the granular materials are ground in washing water, especially in returned washing liquor.

6. Process according to claim 1, characterised in that the mean grain size of the granular materials is reduced by about 4 to 6 %.

7. Process according to one of claims 1 - 6, characterised in that the flotation of the sludge containing the granular materials is carried out in two stages.

**Revendications**

1.- Procédé de nettoyage de matériaux granuleux, tels que battitures ou minéraux contenant de l'huile, de substances grasses entraînées avec ces matériaux, en particulier de l'huile, dans lequel les matériaux sont lavés avec un liquide de lavage contenant du solvant, puis séparés de ce liquide et finalement séchés et dans lequel le liquide de lavage débarrassé des substances grasses est recyclé, caractérisé par le fait que les matériaux, éventuellement cassés pour atteindre des tailles de grains inférieures à 1 mm, sont soumis, pour lissage des surfaces, à une contrainte mécanique par corps solides au cours de laquelle la granulométrie moyenne n'est que faiblement réduite, puis ces matériaux sont lavés au cours d'un processus de flottation, et les matériaux sont séparés au niveau inférieur de la flottation et séchés par déshydratation et le liquide de trop-plein, évacué au trop-plein de la flottation et puis débarrassé des substances grasses et/ou la quantité de liquide laveur présente à l'issue de la flottation lors de la séparation des matériaux granuleux est (sont) recyclé(s).

2.- Procédé selon la revendication 1, caractérisé par le fait que le liquide de lavage se compose d'eau à laquelle on ajoute des détergents de lavage.

3.- Procédé selon la revendication 1 ou 2, caractérisé par le fait que la contrainte mécanique par corps solides est effectuée par broyage.

4.- Procédé selon la revendication 3, caractérisé par le fait que la durée de broyage est comprise entre 2 et 5 minutes environ.

5.- Procédé selon la revendication 3 ou 4, caractérisé par le fait que les matériaux granuleux sont broyés dans l'eau de lavage, en particulier dans la quantité de liquide laveur qui a été recyclée.

6.- Procédé selon la revendication 1, caractérisé par le fait que la granulométrie moyenne des matériaux granuleux est réduite d'environ 4 à 6 %.

7.- Procédé selon l'une des revendications 1 à 6, caractérisé par le fait que la flottation de l'eau trouble contenant les matériaux granuleux est effectuée en deux étapes.

0 080 589